# EUROPEAN PATENT SPECIFICATION

(11) **EP 4 274 091 B1**
(45) Date of publication and mention of the grant of the patent: **30.09.2026**
(21) Application number: 22172099.8
(22) Date of filing: 06.05.2022
(51) Int. Cl.: H02P 25/22, H02P 6/10

(54) **METHOD FOR OPERATING AN ELECTRIC DRIVE UNIT, DATA PROCESSING DEVICE AND ELECTRIC DRIVE UNIT**
VERFAHREN ZUM BETREIBEN EINER ELEKTRISCHEN ANTRIEBSEINHEIT, DATENVERARBEITUNGSVORRICHTUNG UND ELEKTRISCHE ANTRIEBSEINHEIT
PROCÉDÉ DE FONCTIONNEMENT D'UNE UNITÉ D'ENTRAÎNEMENT ÉLECTRIQUE, DISPOSITIF DE TRAITEMENT DE DONNÉES ET UNITÉ D'ENTRAÎNEMENT ÉLECTRIQUE

(43) Date of publication of application: 08.11.2023
(73) Proprietor: Volvo Car Corporation, 40531 Göteborg (SE)
(72) Inventor: ORBAY, Raik, 40531 Göteborg (SE); LARSSON, Daniel, 40531 Göteborg (SE); ROPEL, Andreas, 40531 Göteborg (SE)
(74) Representative: Kransell & Wennborg KB

(56) References cited:
- US-A1- 2016 204 726
- US-A1- 2016 301 348
- US-A1- 2017 310 264
- US-A1- 2020 395 878

## Description

The present disclosure relates to a method for operating an electric drive unit. The electric drive unit comprises an electric machine with a stator and a rotor. The stator comprises a set of phase windings. Moreover, the electric drive unit comprises an inverter for controlling the operation of the electric machine by selectively providing AC signals to the phase windings. The inverter is electrically coupled to the phase windings.

Additionally, the present disclosure is directed to a data processing device comprising means for carrying out such a method and an electric drive unit comprising such a data processing device.

Electric drive units of the type mentioned above are for example used in electric vehicles, such as battery electric vehicles or hybrid electric vehicles. These vehicles may be land vehicles, air vehicles or water vehicles.

The inverter is used for transforming a direct current (DC) being provided by a battery unit into an alternating current (AC) which is fed to the electric machine.

In such an electric drive unit, undesired signal effects may occur besides the desired signal effects which are used for driving the electric machine. The undesired signal effects may for example result from switching events within the inverter.

Such undesired signal effects may be especially noticeable by a user of the electric drive unit, i.e. a user of a vehicle being equipped therewith, if the electric machine is operated at high speeds or at high accelerations and decelerations. This may be the case in connection with a dynamic and active drive style. The undesired signal effects may additionally induce interferences. The undesired signal effects and the corresponding interferences may impair a driving experience.

In this context, US 2017/310264 A1 discloses a drive control apparatus for a multiple-winding motor, wherein a compensation signal can be added to the signal of one winding group in order to compensate interferences between winding groups.

It is, thus, an objective of the present disclosure to improve electric drive units with respect to undesired signal effects and corresponding electromagnetic interferences.

The problem is at least partially solved or alleviated by the subject matter of the independent claims of the present disclosure, wherein further examples are incorporated in the dependent claims.

According to a first aspect, there is provided a method for operating an electric drive unit. The electric drive unit comprises an electric machine with a stator and a rotor. The stator comprises a set of phase windings. Moreover, the electric drive unit comprises an inverter for controlling the operation of the electric machine by providing AC signals to the phase windings. The inverter is electrically coupled to the phase windings. The method comprises:
- triggering an AC drive signal for each phase winding of a first sub-set of phase windings such that the rotor is rotated via the phase windings of the first sub-set,
- triggering a noise compensation measure for at least one phase winding of a second sub-set of the phase windings for compensating an undesired signal effect, wherein the first sub-set of phase windings and the second sub-set of phase windings are overlap-free.

In the present context, a phase winding is to be understood as a winding sector of the stator. Such a winding sector may either alone or together with other sectors be attributed to a certain phase of the electric machine. Thus, a phase winding or a winding sector may also be designated as a bundle of strands of a phase winding or alternatively hairpins. In one purely illustrative example, the electric machine may be a five phase electric machine. The corresponding stator may comprise a total of five winding sectors, i.e. the stator comprises five phase windings. Thus, each of the five phases comprises one single phase winding or winding sector. In this context, only three phase windings or winding sectors may belong to the first sub-set of phase windings and may be used to rotate the rotor. The remaining two phase windings or winding sectors may belong to the second sub-set and may be used for compensating undesired signal effects. Thus, the electric machine is operated like a three phase electric machine without impairing the operation. In another purely illustrative example, the electric machine may again be a five phase electric machine. However, now the corresponding stator may comprise a total of ten winding sectors, i.e. the stator comprises ten phase windings. Thus, two phase windings or winding sectors are attributed to each of the five phases. In this context, five phase windings may belong to the first sub-set of phase windings and the five remaining phase windings may belong to the second sub-set of phase windings. In this example, the electric machine may be operated as a five phase electric machine, however instead of two phase windings or winding sectors only one phase winding or winding sector is used per phase. The remaining phase windings or winding sectors are use d for compensating undesired signal effects. Thus, more generally speaking, the fact that the second sub-set of phase windings of the stator is used for compensating an undesired signal effect may either have the consequence that less phases are used for rotating the rotor or that less phase windings or phase winding sectors per phase are used for rotating the rotor. The undesired signal effects may also be classified as noise. An example of such an undesired signal effect or noise are so-called high frequency spikes which result from switching events of the inverter which is for example controlled using a sinusoidal pulse width modulation. These high frequency spikes are higher harmonics contained in the actually desired sinusoidal output signal of the inverter. Especially when switching the inverter at high frequencies, notable noise is generated in a high frequency band. By triggering the noise compensation measure, the undesired signal effects are fully or partially compensated. This means that the undesired signal effects are eliminated or at least attenuated. In other words, using an appropriate compensation measure, the frequency content of the signals being provided by the inverter can be tailored. Thus, negative effects on the driving experience are eliminated or at least reduced. Due to the noise compensation measure, also the operation of electronic components in the surroundings of the electric drive unit (so-called victims) is improved, i.e. less subject to noise. This applies to electronic components using wired signal connections and wireless signal connections. In the latter case, the quality of signals being transmitted by an antenna is enhanced. Altogether, a wireless connection experience of a user is improved. Additionally, the signal integrity of the vehicle is preserved.

In the method according to the present disclosure, the triggered AC drive signal generates a torque in the electric machine. In contrast thereto, the signals of the triggered noise compensation measure do not generate a torque in the electric machine or at least are not intended to generate a torque.

The undesired signal effect may be an undesired electromagnetic interference effect.

The electric machine may be a synchronous electric machine. For such a machine, the rotation of the rotor shaft is synchronized with the frequency of the supply current since in the stator a rotating magnetic field is created. The supply current is provided by the inverter. In this context, fundamental current harmonics are related to the operation speed and the motor topology. Additionally, the switching operations of the inverter lead to current ripples which will be modulating the fundamental currents. Switching events with high voltage gradients may generate currents leading to winding capacitances among winding strands of the electric machine. Additionally, switching operations may lead to ripple in voltage which will induce currents to feed stray capacitances in cables and circuits in the vicinity of the inverter. This effect, if not controlled, will lead to differential mode emissions. In this context, a differential mode emission is to be understood as an electromagnetic emission that induces a current in an affected circuit, wherein the current is opposed to a desired current in the circuit. Using the method according to the present disclosure, the noise compensation measure being for example a tailored voltage signal or a tailored current signal is able to suppress at least some spectral components of currents of a prescribed bandwidth and, thus, mitigate or eliminate the above-mentioned effects.

The electric drive unit is for example an electric drive unit of a vehicle. Thus, the electric drive unit may be designated as a vehicular electric drive unit. It is noted that the method according to the present disclosure and the corresponding drive unit may be applied in land vehicles, air vehicles and water vehicles.

In an example, the electric machine of the electric drive unit is operated in an electric motor mode while the method according to the present disclosure is performed.

In another example, the method according to the present disclosure is performed while the electric drive unit is operated in a generator mode. The method according to the present disclosure may be performed in real-time.

It is additionally noted that the electric machine of the electric drive unit may comprise more than one stator and/or more than one rotor.

In another example, the phase windings of the stator are so-called concentrated windings. Concentrated windings are characterized in that all the turns of a phase winding or a winding sector have the same magnetic axis.

In a further example, the second sub-set of phase windings comprises at least two phase windings or winding sectors. This offers the possibility to arrange the phase windings of the second sub-set in a symmetric manner.

It is noted that the method according to the present disclosure, of course, can only be applied in operational situations in which it is not necessary to use all phase windings for rotating the rotor. In other words, the method according to the present disclosure may be applied if the electric drive unit is operated under partial load. This applies to most operational situations.

It is also possible to apply the method according to the present disclosure in a situation in which the electric drive unit is operated under full load. In such a case, the ability of most electric drive units to at least temporarily be operated in an overload mode is used. Consequently, even in a full load situation, the noise compensation measure of the present method can be used.

In an example, triggering the noise compensation measure for the at least one phase winding of the second sub-set comprises triggering a zero current and/or a zero voltage for the at least one phase winding. Thus, the phase windings or winding sectors of the second sub-set are not provided with a current and/or a voltage. This has an attenuating effect on undesired signal effects in the phase windings of the first sub-set. As has already been explained above, this may lead to the fact that less than the total amount of phases of the electric machine are used for rotating the rotor. A five phase electric machine may for example be used as a three phase electric machine.

In an example, the electric machine may be operated using less than all available phases, e.g. use only three or four phases of a five phase electric machine. A so-called vector control strategy may be applied in this case. Moreover, the control strategy may comprise keeping the magnetomotive force constant. This means that the magnetomotive force does not change from a situation where all available phases are used to a situation in which less than all phases are used. In other words, the magnetomotive force is kept constant even if a reduced number of phase windings is used. Consequently, the remaining phase currents must be adjusted. The magnetomotive force as mentioned above may be a circular rotating magnetomotive force in the air gap. Of course, the magnetomotive force must not be distorted in a case in which less than all available phases are used. When adjusting the remaining phase currents, a side condition may be that the respective current vectors of the remaining phases have the same amplitude. Altogether, the electric machine may be operated using less than all available phases.

In another example, triggering the noise compensation measure for the at least one phase winding of the second sub-set comprises triggering a non-zero compensation signal for the at least one phase winding. Since the sum of the compensation signal and the undesired signal effect is smaller than the undesired signal effect, the provision of the non-zero compensation signal leads to the elimination or attenuation of the undesired signal effect.

In this example, the triggered non-zero compensation signal may be in discordance with the AC drive signal for the phase windings of the first sub-set of phase windings. Consequently, the undesired signal effect such as current ripple may be suppressed.

In an example, the phase-windings of the second sub-set are distributed over the stator. In an example, the phase-windings of the second sub-set may be evenly distributed or distributed in a balanced manner. This may be understood in at least one of a geometrical sense, an electrical sense, a magnetic sense and a mechanic sense. In all cases, distributing the phase windings of the second sub-set over the stator leads to a smooth operation of the electric machine.

In an example, the method further comprises receiving at least one electric signal parameter characterizing the undesired signal effect over time for at least one of the phase windings. The electric signal parameter is for example a current or a voltage. The electric signal parameter may also relate to at least one of a frequency, an amplitude of a phase shift. Thus, the undesired signal effect can be described by the electric signal parameter. Consequently, appropriate and specific noise compensation measures can be triggered.

The electric signal parameter may be provided by a corresponding sensor unit.

Alternatively, the electric signal parameter may be provided by a model of the undesired signal effect. Based on the model, the electric signal parameter can be derived in a highly efficient manner.

In an example, a current sensor and/or a voltage sensor is arranged in each phase winding or in the corresponding connection between phase winding and the inverter. Accordingly, a voltage and/or a current may be calculated and provided specifically for each phase winding.

It is noted that the electric signal parameter characterizing the undesired signal can be derived from sum signal of a desired and an undesired signal by subtraction of the desired signal.

In an example, the method further comprises analyzing the at least one electric signal parameter and deriving an electric signal parameter forecast characterizing a forecast undesired signal effect. The electric signal parameter forecast is for example a current or a voltage. The electric signal parameter forecast may also relate to at least one of a frequency, an amplitude of a phase shift. Alternatively or additionally, the electric signal parameter forecast may relate to a duty or timing. In other words, a forecast concerning undesired signal effects is provided. This is helpful for effectively and efficiently compensating such undesired signal effects.

In an example, analyzing the at least one electric signal parameter comprises applying a machine learning technique and/or applying an artificial intelligence. This may for example comprise using an autoregressive integrated moving average algorithm and/or a genetic algorithm. A machine learning technique and an artificial intelligence are effective and efficient ways for deriving an electric signal parameter forecast. Consequently, specific compensation measures can be triggered.

In an example, the method further comprises triggering the non-zero compensation signal as a function of the electric signal parameter forecast. Thus, the compensation signal is adapted to the forecast. This leads to a highly effective compensation results.

In an example, the method further comprises triggering the non-zero compensation signal as an inverse of the forecast undesired signal effect. The inverse may also be called a counter signal. This signal is able to suppress at least some spectral components of currents of a prescribed bandwidth. Consequently, the undesired signal effect is neutralized or annulled.

In an example, the method may further comprise triggering an integration of a random element into the AC drive signal for at least one of the phase windings of the first sub-set of phase windings. The random element is a signal element. The random element may be small compared to the AC drive signal. It is known from literature that such random elements are able to reduce the noise in a signal. This is due to the fact that the random element reduces interference effects and harmonics of periodic signals. The random element may be defined by a certain interval and by a signal parameter to which it relates. For example, the timing of a signal may be randomized within an interval of +/- 0,01 seconds.

In an example, the random element may comprise a random modulation signal. This means that the random element is integrated into the AC drive signal by modulation. This is a simple and effective way to integrate a random element.

Alternatively or additionally, at least one of a randomized pulse position modulation, a randomized pulse width modulation and an asynchronous switching scheme may be used to integrate the random element.

In an example, the method may further comprise triggering an integration of a coupling element into the AC drive signal for at least one of the phase windings of the first sub-set of phase windings to enable inductive or capacitive electromagnetic coupling between at least a pair of phase windings. Also the coupling element is a signal element. This signal element is specifically designed such that at least a pair of phase windings is inductively or capacitively coupled. Thus, an electromagnetic interference may be created on purpose. If such an electromagnetic interferences is adapted to an undesired signal effect, it is highly effective in compensating such an undesired effect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module, such as a vehicle control system or an embedded system, which may also be a distributed computer system. The data processing means or the computer, respectively, may comprise one or more of a processor, a memory, a data interface, or the like. It is further understood that the method may also be carried out by a cloud computing service and or an edge computing resource.

According to a second aspect there is provided a data processing device comprising means for carrying out the method of the present disclosure. Such a data processing device is capable of triggering a noise compensation measure for compensating an undesired signal effect. Thus, undesired signal effects are eliminated or attenuated. Thus, negative effects on the driving experience are eliminated or at least reduced.

In an example, also a computer program is provided. The computer program comprises instructions which, when the program is executed by a computer, cause the computer to carry out the method according to the present disclosure.

Moreover, in another example, a computer-readable storage medium may be provided which comprises instructions which, when executed by a computer, cause the computer to carry out the method according to the present disclosure.

According to a third aspect, there is provided an electric drive unit comprising an electric machine with a stator and a rotor. The stator comprises a set of phase windings. Moreover, the electric drive unit comprises an inverter for controlling the operation of the electric machine by selectively providing AC signals to the phase windings. The inverter is electrically coupled to the phase windings. Furthermore, the electric drive unit comprises a data processing device according to the present disclosure. The data processing device is communicatively coupled to the inverter. Thus, in such an electric drive unit undesired signal effects may be effectively and efficiently eliminated or attenuated. Thus, negative effects on the driving experience are eliminated or at least reduced. In other words, such an electric drive unit operates comparatively smoothly.

As has already been mentioned before, the phase windings of the stator may be concentrated windings.

In an example, the stator comprises at least three phases, wherein at least one phase winding or winding sector is attributed to each of the phases. Of course, also more than one phase winding or winding sector may be attributed to each phase.

In an example, the rotor may comprise a set of phase windings. In other words, the rotor does not comprise a permanent magnet. Such motors are known to be rather noisy in operation. However, due to the compensation measures as outlined in the present disclosure, such a motor may be operated in a smooth manner.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows an electric drive unit according to the present disclosure comprising a data processing device according the present disclosure being configured to carry out a method according to the present disclosure,
- Figure 2: shows an electric machine of the electric drive unit of Figure 1 in more detail,
- Figure 3: illustrates the method according to the present disclosure,
- Figure 4: shows an illustrative AC drive signal for the electric machine of Figure 3, the AC drive signal being un-compensated, and
- Figure 5: shows the illustrative AC drive signal of Figure 4, in a state in which it is compensated by applying the method according to the present disclosure.

The figures are merely schematic representations and serve only to illustrate examples of the disclosure. Identical or equivalent elements are in principle provided with the same reference signs.

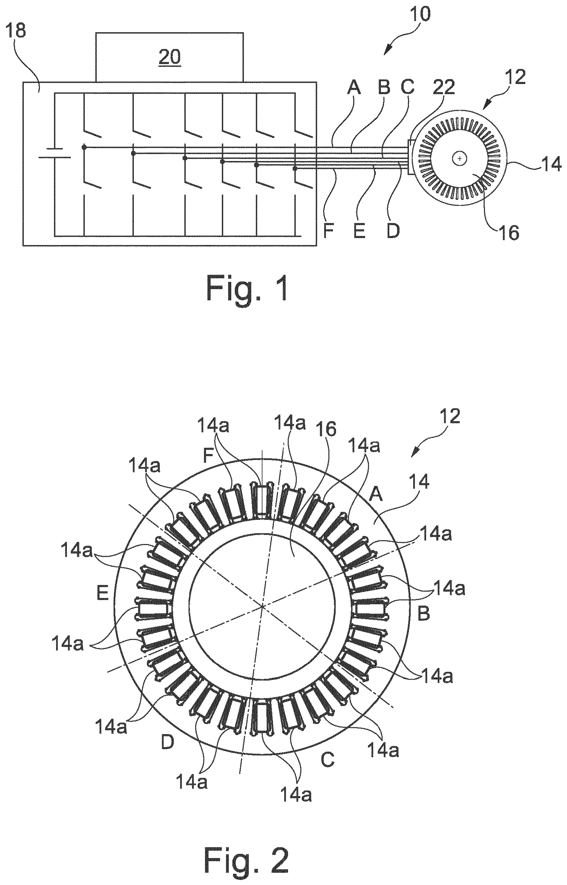

Figure 1 shows an electric drive unit 10.

The electric drive unit 10 is configured to be used in a battery electric vehicle.

The electric drive unit 10 comprises an electric machine 12 with a stator 14 and a rotor 16.

The electric machine 12 is a six phase electric machine. The phases are denoted A, B, C, D, E, F.

As can be seen in more detail from Figure 2, the stator 14 comprises a total of 24 phase windings 14a or winding sectors 14a.

The phase windings 14a are so-called concentrated windings.

Four adjacent phase windings 14a or winding sectors 14a are attributed to each of the phases A, B, C, D, E, F.

The phase windings 14a being attributed to one of the phases A, B, C, D, E, F, may also be designated as strands of the respective phase. Thus, each of the phases A, B, C, D, E, F is composed of four strands.

The rotor 16 is represented schematically in Figure 2. Also the rotor 16 comprises a set of phase windings. Thus, the electric machine 12 does not comprise permanent magnets.

Moreover, the electric drive unit 10 comprises an inverter 18.

The inverter 18 is electrically coupled to the electric machine 12 and is configured to control the operation of the electric machine 12.

Thus, the inverter 18 is adapted for selectively providing an AC signals to each of the six phases A, B, C, D, E, F of the electric machine 12.

The electric drive unit 10 further comprises a data processing device 20.

The data processing device 20 is communicatively coupled to the inverter 18. Thus, the data processing device 20 may also be designated as an inverter control unit or a control unit for the electric drive unit.

The data processing device 20 is also communicatively connected to a switching unit 22 of the electric machine 12.

The switching unit 22 is configured to selectively connect or disconnect each of the phase windings 14a or winding sectors 14a to the inverter.

In other words, for each of the six phases A, B, C, D, E, F, none, one, two, three or four strands may be electrically connected to the inverter 18.

The data processing device 20 comprising means for carrying out a method for operating the electric drive unit 10.

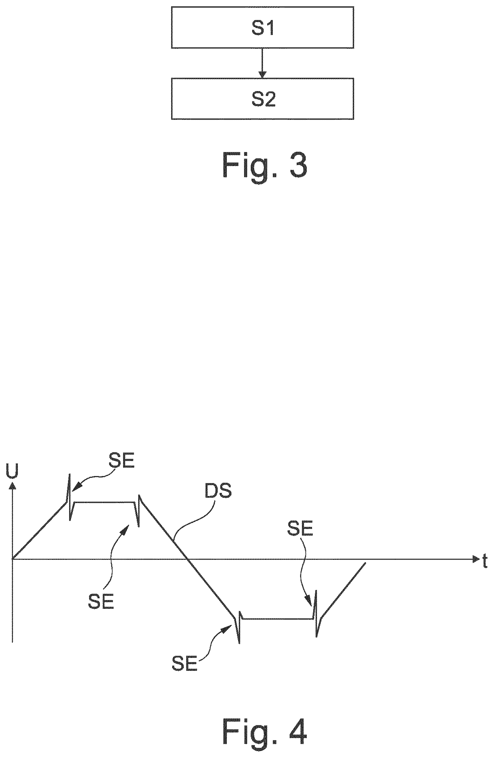

The method will be explained in connection with Figures 3 to 5.

When performing the method, the phase windings 14a of the stator 14 are subdivided in two overlap-free sub-sets.

A first step S1 of the method comprises triggering an AC drive signal DS for each phase winding 14a of the first sub-set of phase windings such that the rotor 16 is rotated via the phase windings 14a of the first sub-set.

A second step S2 of the method comprises triggering a noise compensation measure for at least one phase winding 14a of the second sub-set of the phase windings 14a for compensating an undesired signal effect.

It is noted that, of course, the first step S1 and the second step S2, may be executed in parallel, i.e. at the same time.

In the following, different use cases of the method will be explained.

In a first use case, the phase windings 14a of phases A, C and E form the first sub-set of phase windings and the phase windings 14a of phases B, D and F form the second sub-set of phase windings. Thus, only phases A, C and E are used for rotating the rotor 16. In other words, the electric machine 12 is operated as a three phase electric machine.

Moreover, the phase-windings 14a of the second sub-set are evenly distributed over the circumference of the stator 14.

Triggering the noise compensation measure for the phase windings 14a of the second sub-set comprises triggering a zero current for these phase windings 14a.

Thus, the inverter 18 and the switching unit 22 are operated such that no current is provided to the phase windings 14a of the second sub-set.

It is noted that the phase windings 14a of all phases A, B, C, D, E, F are electrically connected at the neutral point of the electric machine 12.

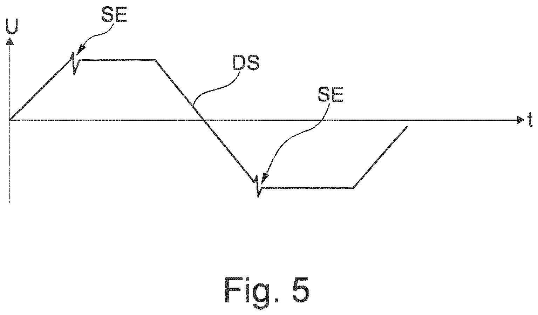

The effect of the noise compensation measure will be explained with a view to Figures 4 and 5. Figure 4 shows an AC drive signal DS being a voltage signal U over time t which is provided by the inverter 18 to any one of the phases A, C, E of the first sub-set. This voltage signal comprises an undesired signal effect SE in the form of voltage peaks. In Figure 4, the method according to the present disclosure has not been used.

Figure 5 also shows an AC drive signal DS being a voltage signal U over time t which is provided by the inverter 18 to any one of the phases A, C, E of the first sub-set. However, in contrast to Figure 4, now the method according to the present disclosure is applied. As can be seen from a comparison of Figure 4 and 5, the undesired signal effect SE has been reduced both in number of occurrences and amplitude.

In a second use case, the two phase windings 14a being arranged in the middle of each of the sectors being attributed to the phases A, B, C, D, E, and F respectively form the first sub-set of phase windings 14a (cf. Figure 2). The phase windings 14a being arranged at a respective first and second circumferential end of each of the sectors of phases A, B, C, D, E, and F form the second sub-set of phase windings. Thus, each of the phases A, B, C, D, E, and F is used for rotating the rotor 16. However, the number of phase windings 14a or winding sectors or strands is reduced from four to two.

Thus again, the phase-windings 14a of the second sub-set are evenly distributed over the circumference of the stator 14.

As in the first use case, the inverter 18 and the switching unit 22 are operated such that no current is provided to the phase windings 14a of the second sub-set.

The effect of this noise compensation measure may again be seen from a comparison of Figures 4 and 5. The explanations provided in connection with the first use case apply mutatis mutandis.

In a third use case, the first sub-set of phase windings 14a and the second sub-set of phase windings 14a is formed as in the first use case.

Now a sensor is used being for example a voltage sensor. Such a sensor is connected to each phase winding 14a of the first sub-set. The sensors are connected to the data processing device 20.

Thus, the data processing device 20 receives an electric signal parameter, in the present example a voltage parameter.

Using the data processing device 20, a frequency of occurrence and an amplitude characterizing the undesired signal effect SE over time for the phase windings 14a of the first sub-set may be derived.

The electric signal parameter is further analyzed by the data processing device 20 using a genetic algorithm.

In doing so, an electric signal parameter forecast is derived from the received electric signal parameter. The electric signal parameter forecast characterizes a forecast undesired signal effect. In other words, the electric signal parameter forecast predicts an undesired signal effect.

Now, a non-zero compensation signal is provided in that the inverter 18 and the switching unit 22 are actuated by the data processing device 20. The non-zero compensation signal is a function of the electric signal parameter forecast.

More precisely, the non-zero compensation signal is an inverse of the forecast undesired signal effect.

The effects of this compensation measure may again be understood by considering Figures 4 and 5. It is noted that, of course, theoretically, the non-zero compensation signal being an inverse of the forecast undesired signal effect fully compensates, i.e. eliminates the undesired signal effect. However, in practice, the compensation may be imperfect. Figures 4 and 5 relate to practical cases.

In a fourth use case, the first sub-set of phase windings 14a and the second sub-set of phase windings 14a is formed as in the second use case.

Beyond that, the fourth use case corresponds to the third use case. Reference is made to the explanations in connection with the third use case.

In all of the above use cases, an integration of a random element into the AC drive signal DS may be triggered for the phase windings 14a of the first sub-set of phase windings 14a.

This is done by operating the inverter 18 and the switching unit 22 accordingly using the data processing device 20.

In the present example, the random element comprises a random modulation signal, i.e. the random element is modulated onto the AC drive signal DS.

Such a random modulation signal reduces interference effects and harmonics being generated by the AC drive signal DS.

Alternatively or additionally, an integration of a coupling element into the AC drive signal DS may be triggered for the phase windings 14a of the first sub-set of phase windings 14a.

The coupling element enables inductive or capacitive electromagnetic coupling between at least a pair of phase windings. This also reduces interference effects and harmonics being generated by the AC drive signal DS.

As before, this is done by operating the inverter 18 and the switching unit 22 accordingly using the data processing device 20.

Also the integration of a coupling element into the AC drive signal DS may be used in connection with all use cases.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: electric drive unit
- 12: electric machine
- 14: stator
- 14a: phase winding or winding sector of the stator
- 16: rotor
- 18: inverter
- 20: data processing device
- 22: switching unit

- DS: AC drive signal
- S1: first step
- S2: second step
- SE: undesired signal effect

## Claims

1. A method for operating an electric drive unit (10), wherein the electric drive unit (10) comprises an electric machine (12) with a stator (14) and a rotor (16), the stator (14) comprising a set of phase windings (14a), and an inverter (18) for controlling the operation of the electric machine (12) by providing AC signals to the phase windings (14a), the inverter (18) being electrically coupled to the phase windings (14a), the method comprising:
triggering an AC drive signal (DS) for each phase winding (14a) of a first sub-set of phase windings (14a) such that the rotor (16) is rotated via the phase windings (14a) of the first sub-set,
**characterized by** triggering a noise compensation measure for at least one phase winding (14a) of a second sub-set of the phase windings (14a) for compensating an undesired signal effect (SE), the first sub-set of phase windings (14) and the second sub-set of phase windings (14a) being overlap-free.

2. The method according to claim 1, wherein triggering the noise compensation measure for the at least one phase winding (14a) of the second sub-set comprises triggering a zero current and/or a zero voltage for the at least one phase winding (14a).

3. The method according to claim 1, wherein triggering the noise compensation measure for the at least one phase winding (14a) of the second sub-set comprises triggering a non-zero compensation signal for the at least one phase winding (14a).

4. The method according to any one of the preceding claims, wherein the phase windings (14a) of the second sub-set are distributed over the stator (14).

5. The method according to any one of the preceding claims, further comprising receiving at least one electric signal parameter characterizing the undesired signal effect (SE) over time for at least one of the phase windings (14a).

6. The method according to claim 5, further comprising analyzing the at least one electric signal parameter and deriving an electric signal parameter forecast characterizing a forecast undesired signal effect.

7. The method according to claim 6, wherein analyzing the at least one electric signal parameter comprises applying a machine learning technique and/or applying an artificial intelligence.

8. The method according to claims 3 and at least one of claims 6 and 7, further comprising triggering the non-zero compensation signal as a function of the electric signal parameter forecast.

9. The method according to claim 8, further comprising triggering the non-zero compensation signal as an inverse of the forecast undesired signal effect.

10. The method according to any one of the preceding claims, further comprising triggering an integration of a random element into the AC drive signal (DS) for at least one of the phase windings (14a) of the first sub-set of phase windings (14a).

11. The method according to claim 10, wherein the random element comprises a random modulation signal.

12. The method according to any one of the preceding claims, further comprising triggering an integration of a coupling element into the AC drive signal (DS) for at least one of the phase windings (14a) of the first sub-set of phase windings (14a) to enable inductive or capacitive electromagnetic coupling between at least a pair of phase windings (14a).

13. A data processing device (20) comprising means for carrying out the method of any one of the preceding claims, wherein the data processing device (20) is communicatively couplable to an inverter (18).

14. An electric drive unit (10) comprising
an electric machine (12) with a stator (14) and a rotor (16), the stator (14) comprising a set of phase windings (14a),
an inverter (18) for controlling the operation of the electric machine (12) by selectively providing AC signals to the phase windings (14a), the inverter (18) being electrically coupled to the phase windings (14a),
**characterized by** a data processing device (20) according to claim 13, wherein the data processing device (20) is communicatively coupled to the inverter (18).

15. The electric drive unit (10) according to claim 14, wherein the rotor (16) comprises a set of phase windings.

## Patentansprüche

1. Verfahren zum Betreiben einer elektrischen Ansteuereinheit (10), wobei die elektrische Ansteuereinheit (10) eine elektrische Maschine (12) mit einem Stator (14) und einem Rotor (16) umfasst, wobei der Stator (14) einen Satz von Phasenwicklungen (14a) umfasst, und einen Wechselrichter (18) zum Steuern des Betriebs der elektrischen Maschine (12) durch Bereitstellen von AC-Signalen an die Phasenwicklungen (14a), wobei der Wechselrichter (18) elektrisch mit den Phasenwicklungen (14a) gekoppelt ist, wobei das Verfahren Folgendes umfasst:
Auslösen eines AC-Ansteuersignals (DS) für jede Phasenwicklung (14a) eines ersten Teilsatzes von Phasenwicklungen (14a), sodass der Rotor (16) über die Phasenwicklungen (14a) des ersten Teilsatzes gedreht wird,
**gekennzeichnet durch** Auslösen einer Rauschkompensationsmaßnahme für mindestens eine Phasenwicklung (14a) eines zweiten Teilsatzes der Phasenwicklungen (14a) zum Kompensieren eines unerwünschten Signaleffekts (SE), wobei der erste Teilsatz von Phasenwicklungen (14) und der zweite Teilsatz von Phasenwicklungen (14a) überlappungsfrei sind.

2. Verfahren nach Anspruch 1, wobei das Auslösen der Rauschkompensationsmaßnahme für die mindestens eine Phasenwicklung (14a) des zweiten Teilsatzes das Auslösen eines Nullstroms und/oder einer Nullspannung für die mindestens eine Phasenwicklung (14a) umfasst.

3. Verfahren nach Anspruch 1, wobei das Auslösen der Rauschkompensationsmaßnahme für die mindestens eine Phasenwicklung (14a) des zweiten Teilsatzes das Auslösen eines Kompensationssignals ungleich null für die mindestens eine Phasenwicklung (14a) umfasst.

4. Verfahren nach einem der vorhergehenden Ansprüche, wobei die Phasenwicklungen (14a) des zweiten Teilsatzes über den Stator (14) verteilt sind.

5. Verfahren nach einem der vorhergehenden Ansprüche, ferner umfassend Empfangen mindestens eines elektrischen Signalparameters, der den unerwünschten Signaleffekt (SE) im Laufe der Zeit für mindestens eine der Phasenwicklungen (14a) charakterisiert.

6. Verfahren nach Anspruch 5, ferner umfassend Analysieren des mindestens einen elektrischen Signalparameters und Ableiten einer elektrischen Signalparametervorhersage, die einen vorhergesagten unerwünschten Signaleffekt charakterisiert.

7. Verfahren nach Anspruch 6, wobei das Analysieren des mindestens einen elektrischen Signalparameters Anwenden einer Maschinenlerntechnik und/oder Anwenden einer künstlichen Intelligenz umfasst.

8. Verfahren nach Anspruch 3 und mindestens einem der Ansprüche 6 und 7, ferner umfassend Auslösen des Kompensationssignals ungleich null als eine Funktion der elektrischen Signalparametervorhersage.

9. Verfahren nach Anspruch 8, ferner umfassend Auslösen des Kompensationssignals ungleich null als eine Inverse des vorhergesagten unerwünschten Signaleffekts.

10. Verfahren nach einem der vorhergehenden Ansprüche, ferner umfassend Auslösen einer Integration eines Zufallselements in das AC-Ansteuersignal (DS) für mindestens eine der Phasenwicklungen (14a) des ersten Teilsatzes von Phasenwicklungen (14a).

11. Verfahren nach Anspruch 10, wobei das Zufallselement ein Zufallsmodulationssignal umfasst.

12. Verfahren nach einem der vorhergehenden Ansprüche, ferner umfassend Auslösen einer Integration eines Kopplungselements in das AC-Ansteuersignal (DS) für mindestens eine der Phasenwicklungen (14a) des ersten Teilsatzes von Phasenwicklungen (14a), um eine induktive oder kapazitive elektromagnetische Kopplung zwischen mindestens einem Paar von Phasenwicklungen (14a) zu ermöglichen.

13. Datenverarbeitungsvorrichtung (20), umfassend Mittel zum Durchführen des Verfahrens nach einem der vorhergehenden Ansprüche, wobei die Datenverarbeitungsvorrichtung (20) kommunikativ mit einem Wechselrichter (18) koppelbar ist.

14. Elektrische Ansteuereinheit (10), umfassend eine elektrische Maschine (12) mit einem Stator (14) und einem Rotor (16), wobei der Stator (14) einen Satz von Phasenwicklungen (14a) umfasst,
einen Wechselrichter (18) zum Steuern des Betriebs der elektrischen Maschine (12) durch selektives Bereitstellen von AC-Signalen an die Phasenwicklungen (14a), wobei der Wechselrichter (18) elektrisch mit den Phasenwicklungen (14a) gekoppelt ist,
**gekennzeichnet durch** eine Datenverarbeitungsvorrichtung (20) nach Anspruch 13, wobei die Datenverarbeitungsvorrichtung (20) kommunikativ mit dem Wechselrichter (18) gekoppelt ist.

15. Elektrische Ansteuereinheit (10) nach Anspruch 14, wobei der Rotor (16) einen Satz von Phasenwicklungen umfasst.

## Revendications

1. Procédé de fonctionnement d'une unité d'entraînement électrique (10), l'unité d'entraînement électrique (10) comprenant une machine électrique (12) pourvue d'un stator (14) et d'un rotor (16), le stator (14) comprenant un ensemble d'enroulements de phase (14a), et un onduleur (18) destiné à commander le fonctionnement de la machine électrique (12) en fournissant des signaux de courant alternatif aux enroulements de phase (14a), l'onduleur (18) étant couplé électriquement aux enroulements de phase (14a), le procédé comprenant :
le déclenchement d'un signal d'entraînement de courant alternatif (DS) pour chaque enroulement de phase (14a) d'un premier sous-ensemble d'enroulements de phase (14a), de sorte à mettre en rotation le rotor (16) par l'intermédiaire des enroulements de phase (14a) du premier sous-ensemble,
**caractérisé par** le déclenchement d'une mesure de compensation de bruit pour au moins un enroulement de phase (14a) d'un deuxième sous-ensemble d'enroulements de phase (14a) en vue de compenser un effet de signal (SE) indésirable, le premier sous-ensemble d'enroulements de phase (14) et le deuxième sous-ensemble d'enroulements de phase (14a) étant exempts de chevauchement.

2. Procédé selon la revendication 1, dans lequel le déclenchement de la mesure de compensation de bruit pour l'au moins un enroulement de phase (14a) du deuxième sous-ensemble comprend le déclenchement d'un courant nul et/ou d'une tension nulle pour l'au moins un enroulement de phase (14a).

3. Procédé selon la revendication 1, dans lequel le déclenchement de la mesure de compensation de bruit pour l'au moins un enroulement de phase (14a) du deuxième sous-ensemble comprend le déclenchement d'un signal de compensation non nul pour l'au moins un enroulement de phase (14a).

4. Procédé selon l'une quelconque des revendications précédentes, dans lequel les enroulements de phase (14a) du deuxième sous-ensemble sont répartis sur le stator (14).

5. Procédé selon l'une quelconque des revendications précédentes, comprenant en outre la réception d'au moins un paramètre de signal électrique caractérisant l'effet de signal (SE) indésirable au cours du temps pour au moins l'un des enroulements de phase (14a).

6. Procédé selon la revendication 5, comprenant en outre l'analyse de l'au moins un paramètre de signal électrique et la dérivation d'une prévision de paramètre de signal électrique caractérisant un effet de signal indésirable prévu.

7. Procédé selon la revendication 6, dans lequel l'analyse de l'au moins un paramètre de signal électrique comprend l'application d'une technique d'apprentissage automatique et/ou l'application d'une intelligence artificielle.

8. Procédé selon la revendication 3 et au moins l'une des revendications 6 et 7, comprenant en outre le déclenchement du signal de compensation non nul en fonction de la prévision de paramètre de signal électrique.

9. Procédé selon la revendication 8, comprenant en outre le déclenchement du signal de compensation non nul sous la forme d'un inverse de l'effet de signal indésirable prévu.

10. Procédé selon l'une quelconque des revendications précédentes, comprenant en outre le déclenchement d'une intégration d'un élément aléatoire dans le signal d'entraînement de courant alternatif (DS) pour au moins l'un des enroulements de phase (14a) du premier sous-ensemble d'enroulements de phase (14a).

11. Procédé selon la revendication 10, dans lequel l'élément aléatoire comprend un signal de modulation aléatoire.

12. Procédé selon l'une quelconque des revendications précédentes, comprenant en outre le déclenchement d'une intégration d'un élément de couplage dans le signal d'entraînement de courant alternatif (DS) pour au moins l'un des enroulements de phase (14a) du premier sous-ensemble d'enroulements de phase (14a) afin de permettre un couplage électromagnétique inductif ou capacitif entre au moins une paire d'enroulements de phase (14a).

13. Dispositif de traitement de données (20) comprenant des moyens de mise en œuvre du procédé selon l'une quelconque des revendications précédentes, le dispositif de traitement de données (20) pouvant être couplé en communication avec un onduleur (18).

14. Unité d'entraînement électrique (10) comprenant une machine électrique (12) pourvue d'un stator (14) et d'un rotor (16), le stator (14) comprenant un ensemble d'enroulements de phase (14a),
un onduleur (18) destiné à commander le fonctionnement de la machine électrique (12) en fournissant sélectivement des signaux de courant alternatif aux enroulements de phase (14a), l'onduleur (18) étant couplé électriquement aux enroulements de phase (14a),
**caractérisé par** un dispositif de traitement de données (20) selon la revendication 13, le dispositif de traitement de données (20) étant couplé en communication avec l'onduleur (18).

15. Unité d'entraînement électrique (10) selon la revendication 14, dans laquelle le rotor (16) comprend un ensemble d'enroulements de phase.
